Europäisches Patentamt

European Patent Office

Office européen des brevets

(19)

(11) **EP 0 718 807 B1**

(12) **EUROPEAN PATENT SPECIFICATION**

(45) Date of publication and mention
of the grant of the patent:
**26.08.1998 Bulletin 1998/35**

(51) Int Cl.6: **G07C 9/00**, G06T 9/00

(21) Application number: **95420341.0**

(22) Date of filing: **05.12.1995**

(54) **Method for compressing and decompressing standardized portrait images**

Verfahren zum Komprimieren und Dekomprimieren von standardisierten Portraitbildern

Procédé pour comprimer et décomprimer des images portrait standardisées

(84) Designated Contracting States:
**DE FR GB**

(30) Priority: **21.12.1994 US 361338**

(43) Date of publication of application:
**26.06.1996 Bulletin 1996/26**

(73) Proprietor: **EASTMAN KODAK COMPANY
Rochester, New York 14650-2201 (US)**

(72) Inventors:
• **Ray, Lawrence A., c/o Eastman Kodak Co.
Rochester, New York 14650-2201 (US)**
• **Ellson, Richard N., c/o Eastman Kodak Co.
Rochester, New York 14650-2201 (US)**
• **Elbaz, Maxime, c/o Eastman Kodak Co.
Rochester, New York 14650-2201 (US)**

(74) Representative: **Buff, Michel
KODAK INDUSTRIE
Département Brevets - CRT
Zone Industrielle - B.P. 21
71102 Chalon sur Saône Cédex (FR)**

(56) References cited:
**EP-A- 0 651 354        EP-A- 0 651 355
WO-A-88/09101        WO-A-92/02000
US-A- 5 331 544**

• **FIRST INTERNATIONAL CONFERENCE ON
INTELLIGENT SYSTEMS ENGINEERING, August
1992, EDINBURGH, pages 29-34, XP000565073
SUTHERLAND ET AL: "Automatic Face
Recognition"**
• **RABBANI ET AL: "Digital Image Compression
Techniques" 1991, SPIE PRESS, BELLINGHAM,
WASHINGTON XP000566680 * Chapter 12 ***

## Description

### Field of Invention

The present invention relates to the field of digital image compression and decompression. In particular, the present technique enables the compressed storage of gray-scale portrait images in under 500 bits.

### Background Of The Invention

In general, image compression seeks to reduce the storage requirements for an image. Decompression restores the image. Not all compression/decompression processes restore images to their original form. Those which do are called "lossless" methods. In general, lossless methods do not compress images as highly as do lossy methods which change the image and introduce some degradation in image quality. In applications where high-compression ratios are desired, lossy methods are used most frequently.

Images can be compressed as they contain spatial correlation. This correlation implies that in most instances differences in neighboring pixel values are small compared to the dynamic range of the image. A basic rule-of-thumb is that more correlation implies a greater potential for higher compression ratios without loss of visual image fidelity. The vast majority of image compression methods have their foundations in broad statistical measures. Some methods are more sophisticated and vary the compression algorithm based upon local statistics (see M. Rabbani and J. P. Jones; "Digital Image Compression Techniques", Vol. T77, SPIE Press, Bellingham, Washington, 1991). However, all of these techniques are applied to the entire image as there is no prior knowledge of image features and image position. The statistics account for correlations between neighboring pixels; they do not account for correlations between groups of pixels in corresponding locations of different images.

Algorithms have been developed to handle motion sequences of images such as sequential frames of a movie (see Bernd Jahne, "Digital Image Processing: Concepts, Algorithms, and Scientific Application", Springer-Verlag, Berlin, 1991). Images taken close in time have a high degree of correlation between them, and the determination of the differences between images as the movement of image segments leads to large compression ratios. This type of image-to-image correlation works well for images which undergo incremental distortions.

Other collections of images have image-to-image correlation, but not to the degree that motion sequences possess and do not compress well with motion algorithms. Consider a library of pictures of missing children. For this collection of images, there will be a large degree of image-to-image correlation based upon pixel location as faces share certain common features. This correlation across different images, just like the spatial correlation in a given image, can be exploited to improve compression.

Analysis of some image libraries yields knowledge of the relative importance of image fidelity based on location in the images. Indeed, maintaining good image fidelity on the face of a child would be more important than fidelity in the hair or shoulders which in turn would be more important than the background. Image compression can be more aggressive in regions where visual image fidelity is less important.

In many applications, preserving the orientation and quantization of the original image is less important than maintaining the visual information contained within the image. In particular, for images in the missing children library, if the identity of the child in the portrait can be ascertained with equal ease from either the original image or an image processed to aid in compression, then there is no loss in putting the processed image into the library. This principle can be applied to build the library of processed images by putting the original images into a standardized format. For missing children portraits this might include orienting the head of each child to make the eyes horizontal, centering the head relative to the image boundaries. Once constructed, these standardized images will be well compressed as the knowledge of their standardization adds image-to-image correlation.

Techniques from a compression method known as vector quantization (VQ) are useful in finding correlation between portions of an image. Compression by vector quantization VQ is well suited for fixed-rate, lossy, high-ratio compression applications (see R. M. Gray, "Vector Quantization", IEEE ASSP Magazine, Vol. 1, April, 1984, pp. 4-29). This method breaks the image into small patches of "image blocks." These blocks are then matched against other image blocks in a predetermined set of image blocks, commonly known as a codebook. The matching algorithm is commonly the minimum-squared-error (MSE). Since the set of image blocks is predetermined, one of the entries of the set can be referenced by a simple index. As a result a multi-pixel block can be referenced by a single number. Using such a method the number of bits for an image can be budgeted. When a greater number of bits is allocated per image block, either the size of the codebook can be increased or the size of an image block can be made smaller.

In the prior art, codebooks are formed from a collection of a number of representative images, known as the training set. Images are partitioned into image blocks, and the image blocks are then considered as vectors in a high-dimensional vector space, e.g., for an 8 x 8 image block, the space has 64 dimensions. Image blocks are selected from each image of the training set of images. Once all the vectors are determined from the training set, clusters are found and representative elements are assigned to each cluster. The clusters are selected to minimize the overall combined distances between a member of the training set and the representative for the cluster the member is assigned to. A selection technique is the Linde-Buzo-Gray (LBG) algorithm (see Y. Linde, et. al., "An Algorithm For Vector Quantizer Design", IEEE Transactions On Communications, Vol. COM-28, No. 1, January, 1980, pp. 84-95). The number of clusters is determined by the number of bits budgeted for describing the image block. Given n bits, the codebook can contain up to $2^n$ cluster representatives or code vectors.

European patent application EP-A-651354 was filed on 25.10.94 and published on 3.5.95, and forms part of the state of the art for the assessment of novelty of the present application under Article 54(3) EPC. EP-A-651354 describes a system for enabling very high-compression ratios with minimal loss in image quality by taking advantage of standardized features in a library of images.

EP-A-651354 describes a process for extracting the common features of images in the library and using this as a basis for image standardization. Once standardized into a standardized library image, the image can be compressed and subsequently decompressed into lossy representations of the original library image.

An overview of the teachings of the above referenced patent application consists of:

Standardization:

Select the image features of greatest importance.

Process a set of representative images from the library to enhance the selected features.

Locate selected features in the representative images.

Determine constraints for locations of image features.

Process the image to meet the image feature location constraints.

Assign regions of the image based on presence of features or a desired level of image quality.

Determine the image-to-image correlation of the images for each subregion.

Allocate capacity for storage of image information for each subregion based on a partition of subregions into image blocks and codebook size.

Construct codebooks to take advantage of the correlation.

Process the image to enhance features.

Locate selected features in the image.

Standardize the image by processing the image to meet the image feature location constraints.

Partition the image based on the subregions and their image blocks.

For each region, determine the entry in the codebook which best approximates the image.

Store the series of codebook values for each image block as this is the compressed image.

Decompression:

Extract the codebook values from the series of codebook value.

Determine the codebook based on corresponding subregion position in the codebook value series.

Extract an image block based on the codebook value from the above determined codebook.

Copy the image block into the appropriate image block location in the subregion.

Continue inserting image blocks until all image block locations are filled in the entire image.

In order to store a compressed facial image in a manner consistent with international standards for a single track of a magnetic transaction card, the compressed facial image data must be below 500 bits (see ISO 7811). This capacity is compromised further by the existence of certain reserved characters which further reduce the bit capacity of the magnetic track. These cards have an information-theoretical maximum storage capacity for one of the tracks of 451 bits.

When the target number of bits is extremely small, as is the case for facial image storage in 442 bits, the above described compression/decompression process fails to provide facial images of consistent quality. Consistent image quality is desirable when attempting to identify a person from an image. Additional improvements are necessary in the quality of the compressed images for more demanding verification systems. More specifically, opportunities for improvements exist in codebook formation, image standardization and image block symmetry.

Previous compression methods used a codebook formation process based on training with the so-called LBG algorithm. This algorithm is one form of a class of algorithms referred to as clustering algorithms. The point of the algorithm is to find a predetermined number of groups within a data set and to select a representative for that group in an optimal way. In the case of the LBG algorithm, the dataset consists of blocks of pixels from a number of images, and the algorithm operates to find a predetermined number of blocks which best represents the dataset. While there are many metrics to measure what is good, the most common one is the minimum distance in a Euclidean sense, i.e., sum of the squares of differences between pixels. The representative of a group is often the centroid of the group, i.e., average of the blocks in the group. The LBG algorithm proceeds by first making an assignment of groups, selecting the centroid for each group, and reassigning the elements of the dataset to a centroid by selecting the closest centroid. The reassignment forms a new grouping and the algorithm can continue in an iterative fashion until convergence occurs.

In many instances, while the number of groups begins at the desired number, the reassignment process reduces the overall number of groups. The result is suboptimal, since the addition of another group will give better overall results. Hence, a method for maintaining the number of active groups is desirable. Another problem that can occur is that a group can be reduced to having an extremely small number of members. In the case where a group has a single member, the centroid is that member, and the distance between the member and its centroid is zero, and the cluster remains. The result here is that some groups are large and a better ensemble result could be attained by splitting a large group.

The preferred method is to maintain the number of active groups by counting the number of groups, and for each group determine the extent, i.e., diameter of the group, and if some groups have no member, split the group of the largest extent into two smaller groups. The problem of excessively small groups is handled by treating the data elements of these groups as outliers and eliminating them from the dataset. This process must be executed with caution, otherwise too many of the data elements will be discarded.

EP-A-651354 describes a type of correlation within facial images using the approximate mirror image symmetry between the left and right sides of the face. Frequently in near front perspective portraits, a large degree of correlation exists between the portions of the face close to the centerline. In particular, the image blocks used to render the part of the face above and below the eyes exhibit a high degree of symmetric correlation. However, along the centerline of the face the level of symmetry drops off due to the variability of the appearance of the nose when viewed from slightly different angles. A method is used to further reduce the number of bits necessary to store a compressed portrait image by exploiting the natural symmetry of the human face in the regions around the facial centerline without imposing deleterious symmetry constraints on the nose.

While the geometry of the human face may have inherent symmetry, the lighting conditions for portraits may be highly asymmetric. This results in a luminance imbalance between the left and right sides of a human facial portrait. A method is used for balancing the lightness of a human facial portrait in order to achieve a higher degree of facial image portrait standardization and to enhance the natural symmetry of the human facial image.

WO-A-9202000 discloses a method for eliminating the effects of brightness variation.

With the standardization of both the luminance and the location of image features, specialized codebooks can be developed to better represent the expected image content at a specified location in an image. A method of codebook specialization is described by Sexton in U.S. Patent No. 5,086,480, entitled "Video Image Processing", in which the use of two codebooks is taught. This method finds the best codevector from amongst the two codebooks by exhaustively searching both codebooks, and then flag the codebook in which the best match was found. The net result is a "supercodebook" containing two codebooks of possibly different numbers of codevectors where the flag indicates the codebook selected. Codebook selection does not arise from *a priori* knowledge of the contents of a region of the image; Sexton calculates which codebook is to be used for every codevector in every image. An opportunity for greater compression is to eliminate the need to store a codebook flag.

Some areas of a portrait image do not contribute any significant value to the identification of an individual. For instance, shoulder regions are of minimal value to the identification process, and moreover, this region is usually covered by clothing which is highly variable even for the same individual. Since little value is placed in such regions the allocation of bits to encode the image may also be reduced. In the present invention some of these areas have been allocated few if any bits, and the image data is synthesized from image data of neighboring blocks. This permits a greater allocation of bits to encode more important regions.

## Summary Of The Invention

The method according to the present invention is set out in claim 1.

The overall purpose of the present invention is to provide a technique for producing facial images, of adequate quality, for use in the identification process of a cardholder of a transaction card. The present invention enables the compression, storage, and retrieval of a portrait image where the compressed portrait.image data can be stored within a single track of a transaction card as specified by international standards. The present invention differs from the prior art compression method by adding linked image blocks for symmetric facial regions, having a top-to-bottom, or horizontal, symmetry property.

From the foregoing it can be seen that it is a primary object of the present invention to encode a portrait image with a minimum number of bits.

The above and other objects of the present invention will become more apparent when taken in conjunction with the following description and drawings wherein like characters indicate like parts and which drawings form a part of the present invention disclosure.

## Brief Description Of The Drawings

Figure 1 illustrates, in block diagram form, an overview of the process flow which is the context of the present invention.

Figures 2A, 2B, and 2C, illustrate a frontal facial portrait that is tilted, rotated to a standardized position, and sized to a standardized size, respectively.

Figure 3 illustrates, in flow chart form, the method of standardization of the present invention.

Figure 4A shows the positions and sizes of template elements within a template.

Figure 4B illustrates, using darker shaded areas, the positions and sizes of the template elements within the template that have a left-to-right flip property.

Figure 4C illustrates, using darker shaded areas, the positions and sizes of the template elements within the template that have a top-to-bottom flip property.

Figure 4D illustrates, using darker shaded areas, the positions and sizes of the template elements within the template that are linked.

Figure 5 illustrates, in table form, the portrait features and their characteristics in the template used in a specific embodiment of the present invention.

Figures 6A and 6B illustrate the template element data record for each element in the template of an example template produced by the method of the present invention.

Figure 7 illustrates, in flow chart form, the method of training to construct codebooks.

Figure 8 illustrates a collection of codevectors associated with each of the feature types used in a specific embodiment of the present invention.

Figure 9A illustrates, in flow chart form, the model of compression.

Figure 9B illustrates, in flow chart form, the method of constructing the compressed bit-stream.

Figure 10 illustrates the codevector numbering and labeling for a compressed image.

Figure 11 illustrates the compressed bit representation for an image.

Figure 12 illustrates a transaction card with a data storage means.

Figures 13A and 13B illustrate, in flow chart form, a method of decompression.

Figure 14 illustrates the codevectors as extracted from the feature type codevector collections with the lighter shaded codevectors having at least one flip property.

Figure 15 illustrates the codevectors after execution of all flip properties.

Figure 16 illustrates the final image.

Figure 17 illustrates a preferred system arrangement on which the method of the present invention may be executed.

## Detailed Description Of The Invention

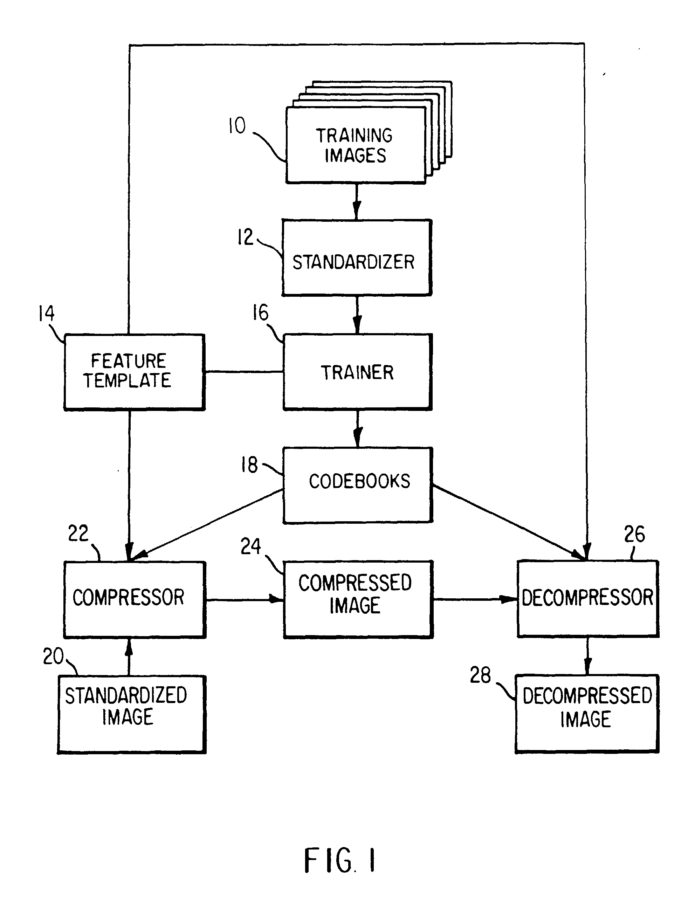

The block diagram of Figure 1 gives an overview of the functionality of the present invention. Within Figure 1, a collection of training images 10 is loaded into a standardizer 12 which processes the training images 10 into standardized training images of consistent format. The standardized training images are further processed, using a feature template 14, to generate training image blocks, the functionality of which is represented by trainer 16. The trainer 16 forms codebooks 18 consisting of codevectors based on the training image blocks. The codebooks, combined with the feature template 14, become the basis for the compression and decompression process. A standardized image, for example 20, is formed from an original image such as a portrait, using the functionality of the standardizer 12. When a standardized image 20, that is to be encoded, is sent to a data compressor 22 the compressor generates a compressed image 24. The compressed image can then be stored and or transmitted for future use. A decompression process, performed by a decompressor 26, using the same feature template and codebook data as was used in the compressor 22, provides a decompressed image 28.

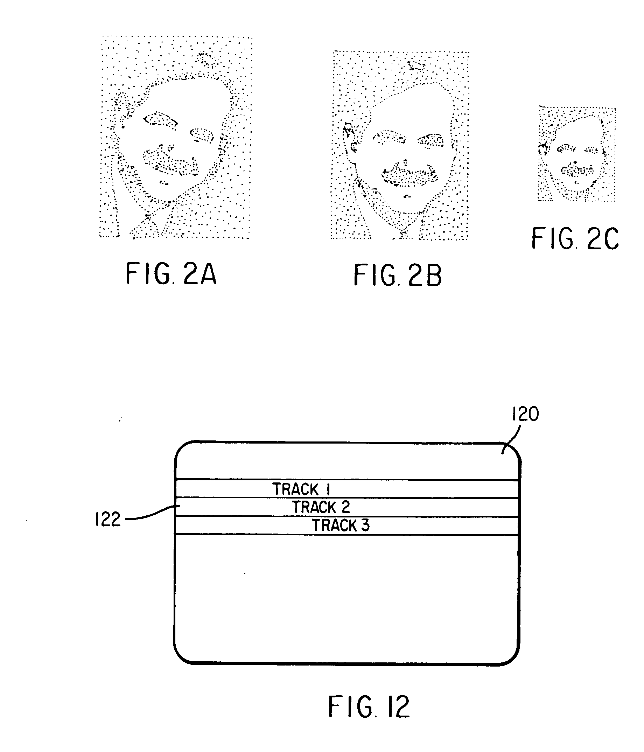

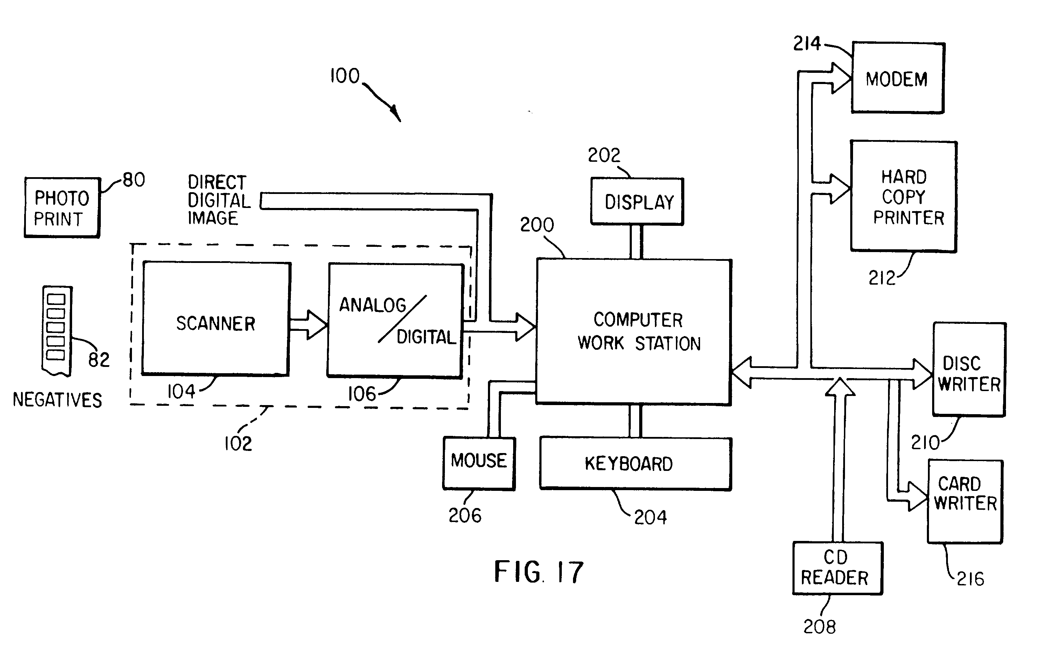

Figure 2A, represents an image that is a frontal facial portrait. In this example of an image the face is tilted and translated (off-centered) with respect to the center of the image. Dependent on the source of images other variations in the positioning and sizing of the face within the image will be encounted. To achieve maximum results with the present invention the size, position, and orientation of the face is to be standardized. In order to operate upon the image, the image is placed into a digital format as a matrix of pixel values. The digital format (pixel values) of the image is derived by scanning and/or other well known digital processing techniques that are not part of the present invention. The digital image is then displayed on a display device, for example, the display 202 shown in Figure 17, and a standardization process is applied to form a standardized geometric image. The images are standardized to provide a quality match between the template elements associated with the feature template 14 (to be described in detail later in this description of the invention). The process starts with the image of Figure 2A by locating the center of the left and right eyes of the image subject. In Figure 2B a new digital image, a partially standardized geometric image, is formed by rotating and translating the original image of Figure 2A, if necessary. The rotation and translating is performed in software using well known image processing operations so as to position the left and right eye centers along a predetermined horizontal axis and equally spaced about a central vertical axis. Figure 2C illustrates the image of Figure 2B sized by a scaling process to form the standardized geometric image.

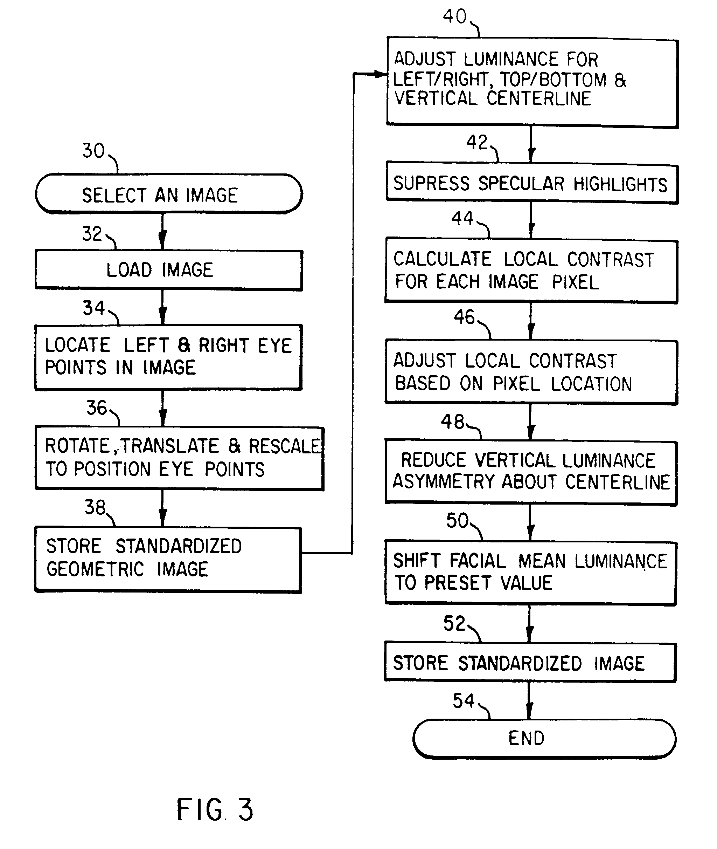

Referring now to Figure 3, the process flow for forming the standardized geometrical image is set forth in the left column of flow blocks commencing with the operation block 30, labeled, "select an image" to identify its function. All of the flow blocks shown in the drawings will be labeled according to their function. The selection process is a selection based upon the existence of a frontal facial image of a person that is to have their image processed with the template 14. Included in the selection process is the creation of the digital matrix representation of the image. The digital matrix, is next loaded, operation 32, into the system for display to an operator (see the system of Figure 17). As previously discussed the operator locates the left and right eye points, operation 34, and performs any needed rotation, translating and rescaling of the facial portion of the image to form the standardized geometrical image as per operation 36. The standardized geometric image is then stored per operation 38.

More specifically, in the preferred embodiment of the invention, the standard geometry of the image was set to be an image size of 56 pixels in width and 64 pixels in height with the eye centers located 28 pixels from the top of the image and 8 pixels on either side of an imaginary vertical center line. Identifying the centers of the left and the right eye is done by displaying the initial image to a human operator who points to the centers using a cursor that is driven by means of a device such as a mouse, digital writing tablet, light pen or touch sensitive screen. An alternate approach would be to automate the process using a feature search program. In one embodiment the human operator localizes the eye positions, and a processor fine-tunes the location through an eye-finding search method restricted to a small neighborhood around the operator-specified location.

With the image size and eye position adjustments made, the luminance standardization procedure takes place. In the right hand column of blocks, evenly labeled 40-54, the luminance of the standardized geometric image is processed to reduce the variability in perceived lighting of image subjects, to reduce specular highlights, adjust skin tones to predetermined values, and to reduce shadows with the resultant standardized geometric image being stored for future use. There are three spatial scales used to standardize the variations in the luminance of the training images; large for light level/direction, medium for correcting asymmetric shadows from side lights, and small for reduction of specular highlights from glasses, jewelry and skin. These procedures change the mean luminance level in the image. Variations in luminance level, referred to as contrast, are also adjusted in order to enhance certain features which are useful in identifying features, but are diminished when converting color images to gray-scale.

The final step of the image standardization process, prior to storage, is to shift the facial mean luminance, i. e., the average lightness found in the general vicinity of the nose, to a preset value. In the preferred embodiment of the present invention for a light skin toned person the preset value is 165, for a medium skin tone 155, and for a dark skin tone the value is 135. The formed standardized digital image is now represented by a storable matrix of pixel values.

For more information about standardization of an image, the man skilled in the art could be referred to the European co-pending Application EP-A-718788 filed on even date and claiming the priority of US 08/361,352.

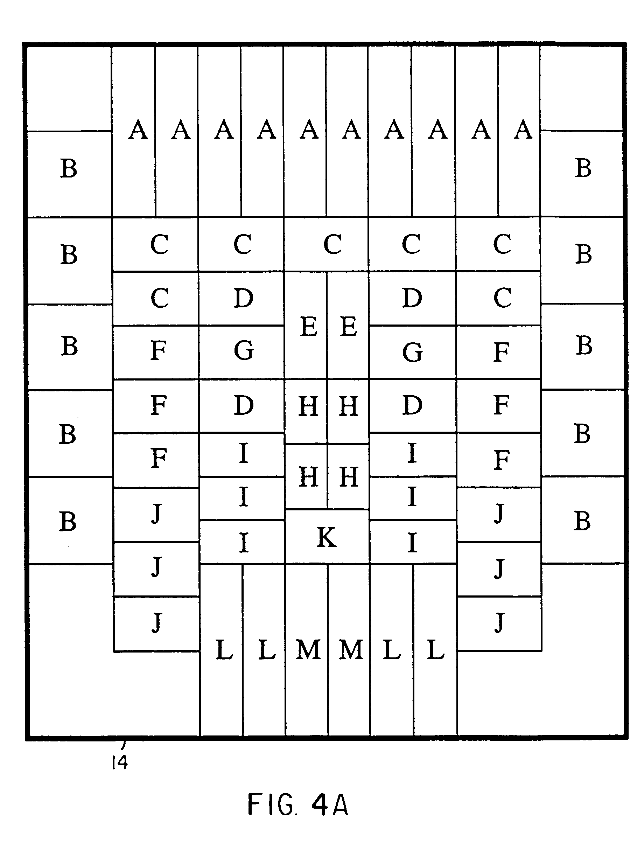

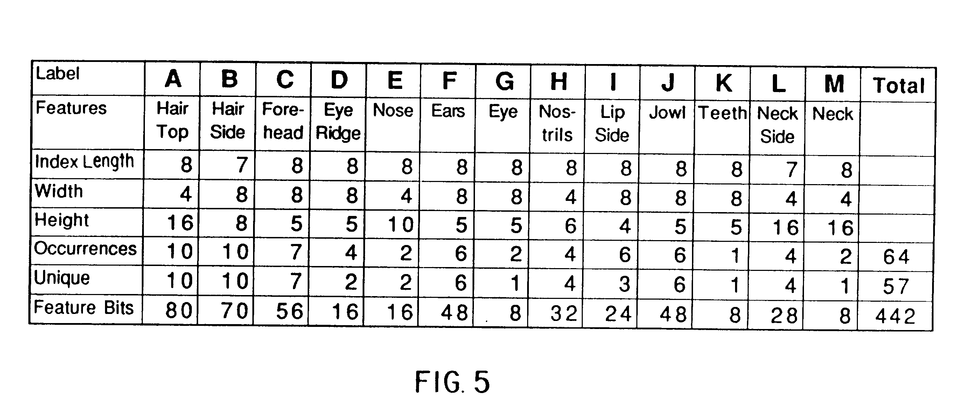

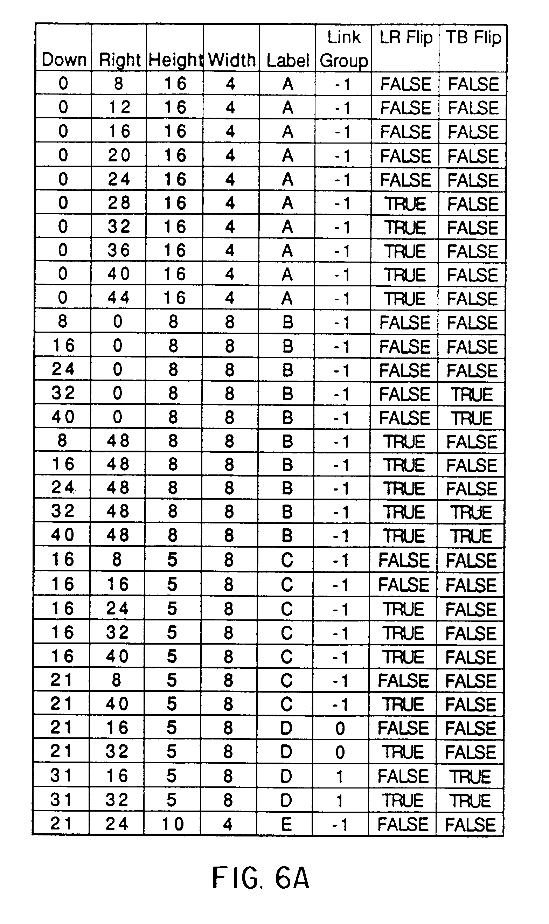

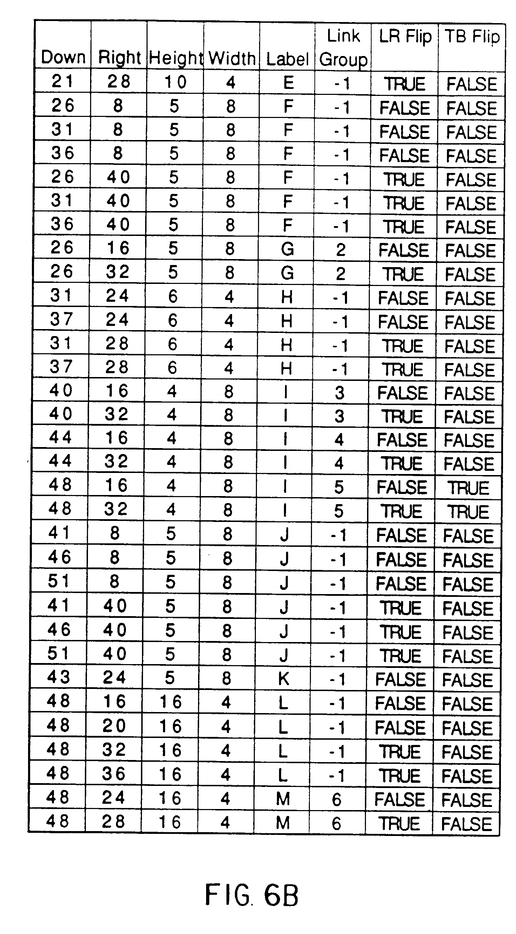

Figure 4A, illustrates the layout of a template 14 that is to be used with the standardized image. The template 14 is partitioned into 64 template elements labeled A through M. The elements are arranged in accordance with 13 corresponding features of a human face, for example, the template elements labeled A correspond to the hair feature at the top of the head and the template elements labeled G correspond to the eyes. The tables of Figures 5, 6A, and 6B provide further description of the remaining template elements. Although the preferred embodiment of the invention is implemented with 64 template elements and 13 features it is to be understood that these numbers may be varied to suit the situation and are not to be construed as limiting the method of this invention. Also to be noted is that some of the regions of the template are not assigned to any element. These unassigned regions will not have their image content based on retrieval of information from codebooks. The method for assigning image content to these regions will be based on the assignment of adjoining regions which will be described below. The template size matches the geometry of the standardized image with 56 pixels in width and 64 pixels in height. The size of the template elements are based upon the sizes of facial features that they intend to represent. For example, G is the relative size of an eye in a standardized image and both instances of elements G are positioned in the locations of the eyes in a standardized image.

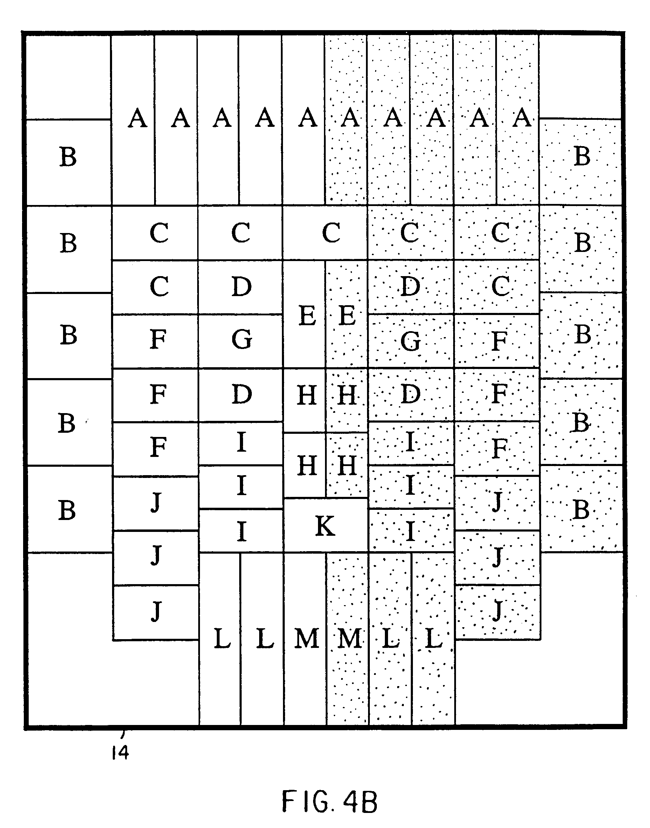

Referring now to Figure 4B, the darker shaded template elements are assigned a left-to-right flip property that will be described in detail later.

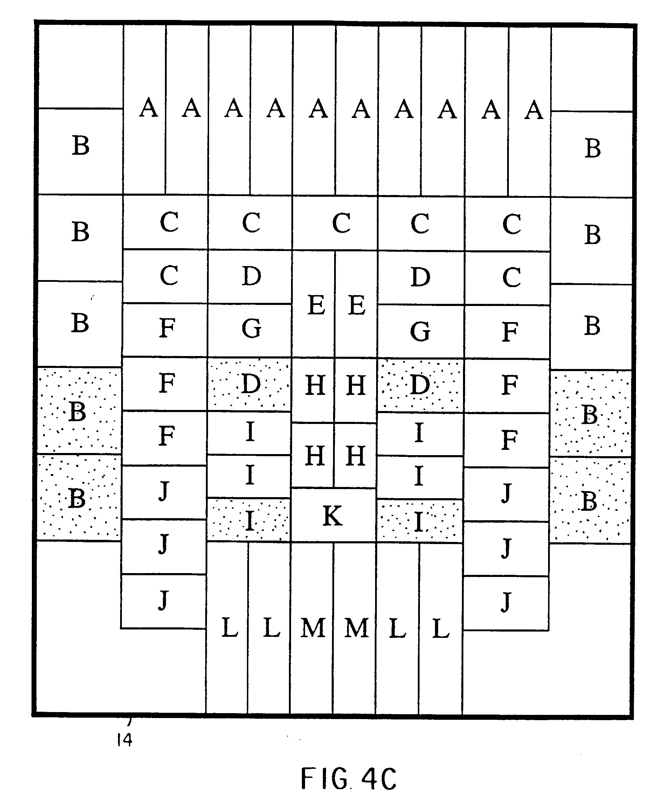

Referring to Figure 4C, the darker shaded template elements are assigned a top-to-bottom flip property that will also be described later. It is to be noted that template elements may be assigned more than one property.

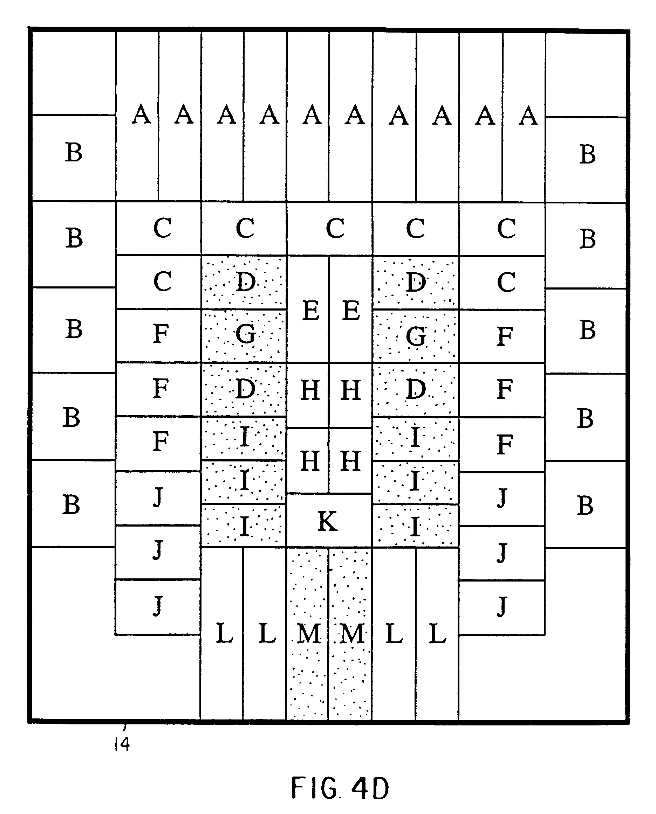

Another property of template elements is linkage. Figure 4D represents, with the darker shaded region, the location of template elements which are part of a link. In this specific embodiment, there exist 7 linked pairs of elements. The linkage is horizontal between each pair of darkened template elements, for example, G at the left of center is linked to G at the right of center. Although 7 linked pairs are shown as the preferred embodiment, linkages can occur in groups larger than two and between any set of like labeled elements.

As can be observed, the template 14 consists of a sequence of template elements representing a sequence of data records where each record, in the preferred embodiment, describes the location, size, label, left-to-right property, top-to-bottom property, and linkage. Records with other and/or additional factors may be created as the need arises.

The template 14 records the distribution and size of template elements. Each template element has assigned to it a codebook 18 (see Figure 1) and a spatial location corresponding to the image. As previously stated, the template 14 consists of 64 template elements composed of rectangular pixel regions. These template elements are assigned to one of 13 different codebooks, each corresponding to a different type of facial feature. The codebooks 18 are collections of uniformly-sized codevectors of either 4x16, 8x8, 8x5, 4x10, 4x6 or 8x4 pixels. The codevectors which populate the codebooks 18 are produced by the trainer 16 (Figure 1) from the image blocks extracted from the training images.

In Figure 5, a table describes the properties of the template elements A-M shown in Figures 4A-D. The first listed property of the codebook is the number of codevectors the codebook contains, and this is either 128 or 256. These numbers are both powers of 2, and in particular, they are $2^7$ and $2^8$. This is advantageous as the codebook indexes used to specify a codevector utilize the full range of a 7-bit or 8-bit index. The index length of the codebooks is shown in the table of Figure 5 as either an 8 or a 7. The dimensions of the image blocks for the codevectors are the second and third properties listed and are given as the block width in pixels and the block height in pixels. The number of pixels per block is the product of the block width and block height. The fourth listed property is the number of occurrences of template elements in the feature template of the specific embodiment which are assigned to the codebook. The unique property, the fifth listed feature property, represents how many of these template elements are uniquely chosen (which eliminates one member of each pair of linked template elements). The sixth listed feature property is the number of bits allocated to store the selected codevectors from the codebook. This is the product of the number of unique template elements and the index length in bits. The sum of the entries in the feature bits row is 442, the total number of bits required to store the compressed image as an unconstrained binary record. The feature template thus carries all the information needed to build both the maps of Figures 4A-D and the table shown in Figure 5. The tables of Figures 6A and 6B represent the maps of Figures 4A-D in data form.

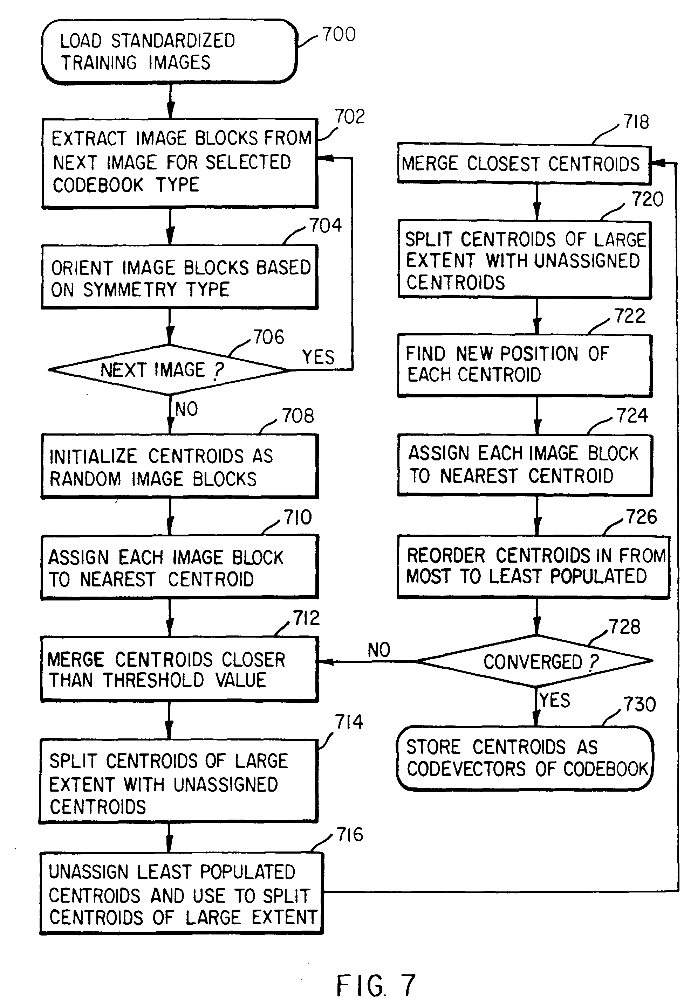

Referring now to the operational flow of the trainer 16 shown in Figure 7, the first block, block 700, represents loading standardized training images. This is a collection of images considered to be representative of the portrait images which will be sent to the compressor 22 to be compressed using codebooks 18 formed by this training process. First image blocks are extracted from the image for a selected codebook type, as represented by block 702. Next the extracted image blocks are oriented based on their symmetry type, such as the top-to-bottom and the left-to-right flip properties described above. This is represented by block 704. The next block, decision block 706, checks for the presence of another image in the standardized image training set. In general, 2,000 images are recommended for this training process. If there is another image in the set, the process loops back to block 702, as shown in the diagram. If not, proceed to block 708, where the centroids are initialized as random image blocks. In the preferred embodiment, the centroids are initialized as the first sequence of image blocks. Referring next to block 710, each image block is assigned to the nearest centroid that was determined in block 708. In block 712 the centroids that are closer to each other than a threshold value are merged. For example, if two centroids have been determined to be less than a predetermined distance away they are flagged as being too close, in which case they are merged and all image blocks are assigned to a single centroid, leaving the other centroids unassigned. Referring to block 714, centroids of large extent are split with unassigned centroids. This means that if a centroid has a very large distance between different codevectors assigned to it, then this centroid is split into two centroids, where one of the new centroids that is assigned to these codevectors comes from an unassigned centroid from the previous step. In block 716 the least populated centroids are unassigned and then used to split the remaining centroids that have been determined to be of large extent. In block 718 the closest centroids are merged together. Once again taking the newly-unassigned centroids resulting from the merge process in block 720, more centroids of large extent are split. Referring to block 722 a new position is found for each of the centroids. This process is required because in shuffling the assignment of image blocks to the various centroids the location of the center of the codevectors assigned to the centroid has actually changed. A new position for the center of the group of codevectors assigned to each centroid group is calculated to determine how the centroid has moved through the image block reassignment process. Referring to block 724, an assignment of each one of these image blocks to the nearest centroid is made, since the centroids have now moved around a bit, it is possible that some of the image blocks that have been assigned to one centroid may in fact now be closer to another centroid.

Referring to block 726, the centroids are reordered from the most to the least populated. This reordering accelerates the reassignment process in future iterations. In block 728, a convergence test is performed. If convergence has not been completed, the process returns to block 712 where centroids that are too close together are merged. If convergence has been completed, the process proceeds to block 730 where the centroids are stored as the codevectors of the newly-formed codebooks.

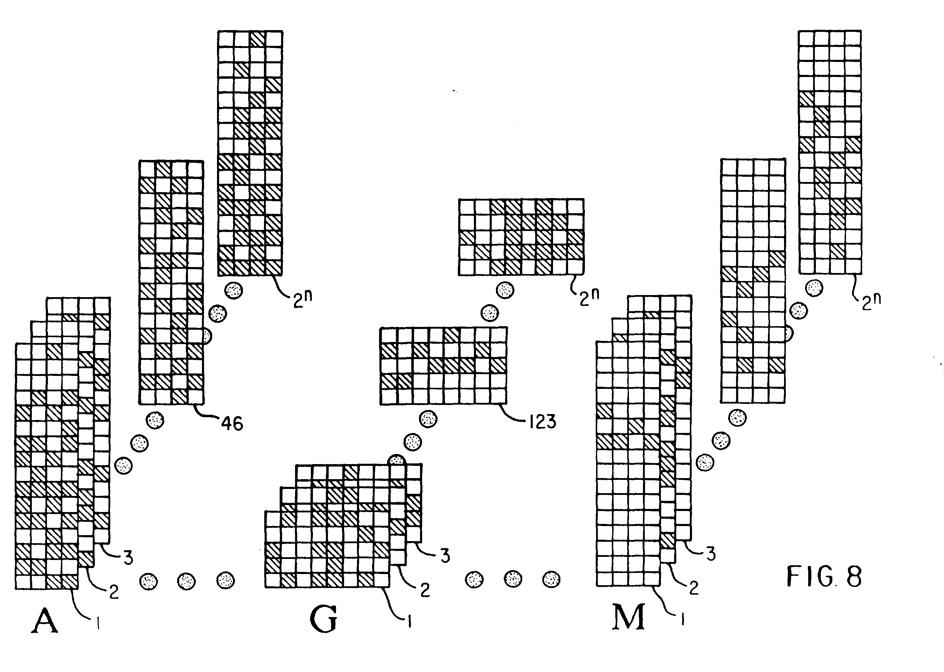

In Figure 8, a partial collection of codevectors are shown for the codebooks corresponding to the feature types A, G, and M, is shown in detail. Note that the feature element G123, of Figure 8, corresponds to the left and right eye elements in the templates of Figures 3, 4A-4D, 5, and 10. Likewise, the template element A46, of Figure 8, corresponds to hair in the upper left corner of the template shown in Figures 3, 4, 5, and 10.

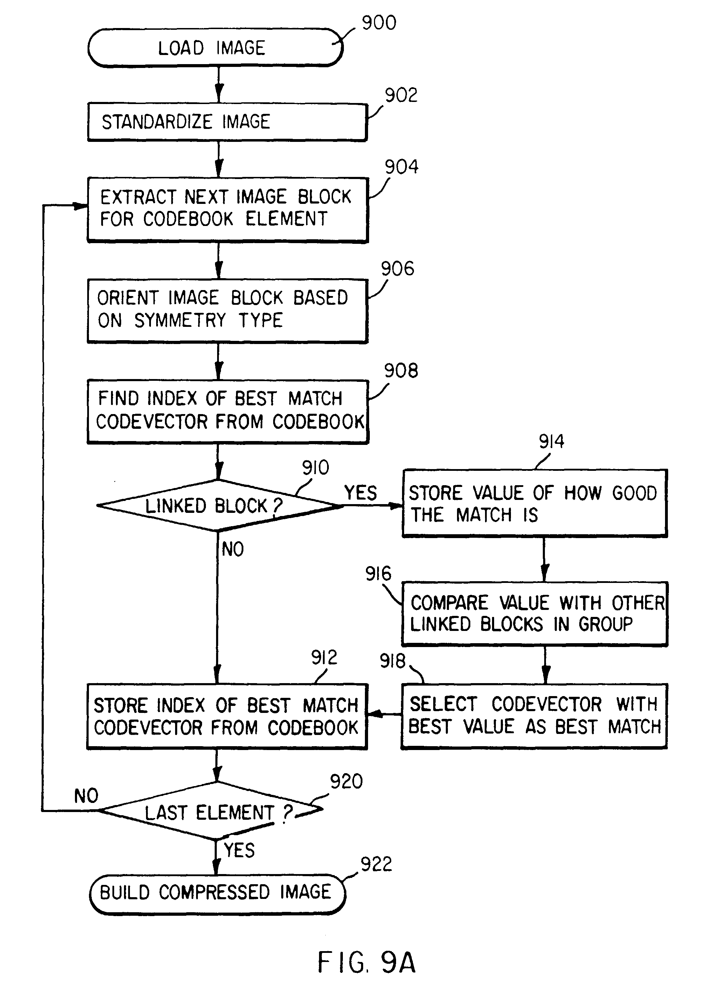

Figure 9A, illustrates in flow chart form, the process for finding the best-matching codevectors for the various template elements of an image. The process begins with the loading of a standardized image or the loading of an image to be standardized, as shown in blocks 900 and 902. The standardized image corresponds to block 20 of Figure 1 and is the result of the process represented by block 902.

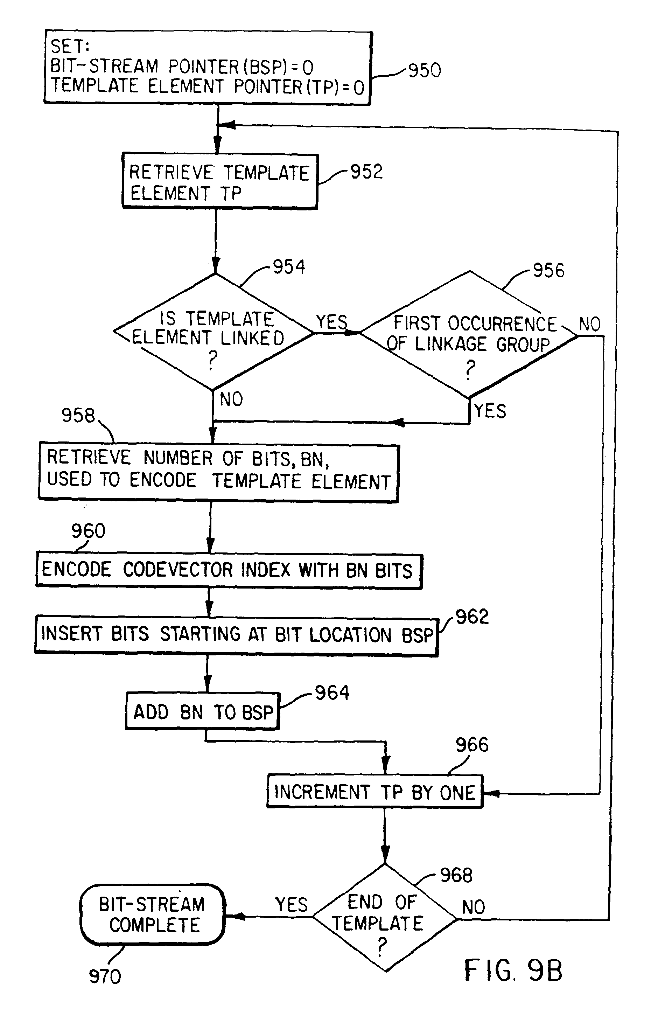

In block 904 the next image block that corresponds to the first template element is extracted from the standardized image. The extracted image block is then oriented as shown in block 906, based on the symmetry type of the horizontal flip and/or the vertical flip property. In block 908 the index of the best-matched codevector from the codebook is found by comparing the image block with all the codevectors in the codebook that correspond to the feature type for that template element. The comparative block 910, determines whether or not the block is linked, as based on the information stored in the template. If the block is linked the flow proceeds to block 914 the value is stored which represents how good of a match occurs. In the specific embodiment of the present invention the mean-square-error comparison between these two image blocks and the codevector is used as a measure of the goodness of the match though other measures of goodness can be readily conceived. In block 916 the value from the match, as in the preferred embodiment, is compared with other link blocks in the group. In block 918 the codevector with the best value is selected, in this case, the lowest value for the mean-square-error test. This vector is then used in block 912 as the index of the best-match codevector from that codebook. If an image block is not linked proceed directly to block 912. From block 912 the process proceeds to block 920, another comparative block which determines whether this is the last element in the template. If it is not, the process returns to block 904 and extracts the next image block corresponding to the next template element. If it was the final image block then the process proceeds building the compressed image bit stream in block 922. The building process is described in Figure 9B.

Proceed now to Figure 9B, where in block 950 the bit stream pointer, BSP, is set to zero and the template element pointer, TP, is also set to zero. In block 952 the template element number TP is retrieved. Block 954 is a decision block wherein it is determined if the template element is linked. If the template element is not linked the process proceeds to block 958, to be described later. If the template element is linked the process proceeds to the first decision block 956, to determine if this is a first occurrence of the linkage group. If the element is the first occurrence of the linkage group the process proceeds to block 958, to be described below. If it is not the first occurrence of the linkage group the process proceeds to block 966, to be described below.

Referring now to block 958 a number of bits from the template element, labeled as "BN" are retrieved. This number of bits is used to encode the codevector index of the template element. In the preferred embodiment these are either 7 or 8 bits per template element. Proceeding down to box 960, the codevector index is encoded with BN bits.

At block 962, the number of bits, BN, starting at bit location BSP are inserted. At block 964 the bit stream pointer BSP is incremented by BN, and in block 966, the template element pointer is incremented by one. Decision point 968 asks if the template elements have been exhausted and, if the answer is "yes", the bit stream is complete per block 970. If the answer is "no" and more template elements exist, the process loops back to block 952 and the process continues.

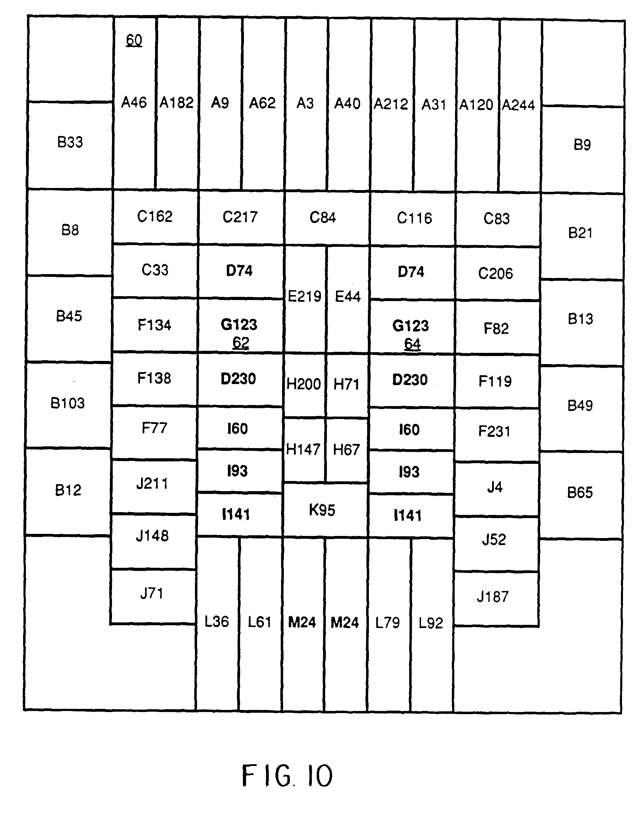

Figure 10 illustrates the results for a specific standardized image of the best-match codevector comparison process described in Figures 9A and 9B. In Figure 10 each of the template elements has both a letter and a number assigned to it. The letter indicates the feature type corresponding to the template element, and the number indicates the index of the best-matched codevector according to the embodied measure of goodness.

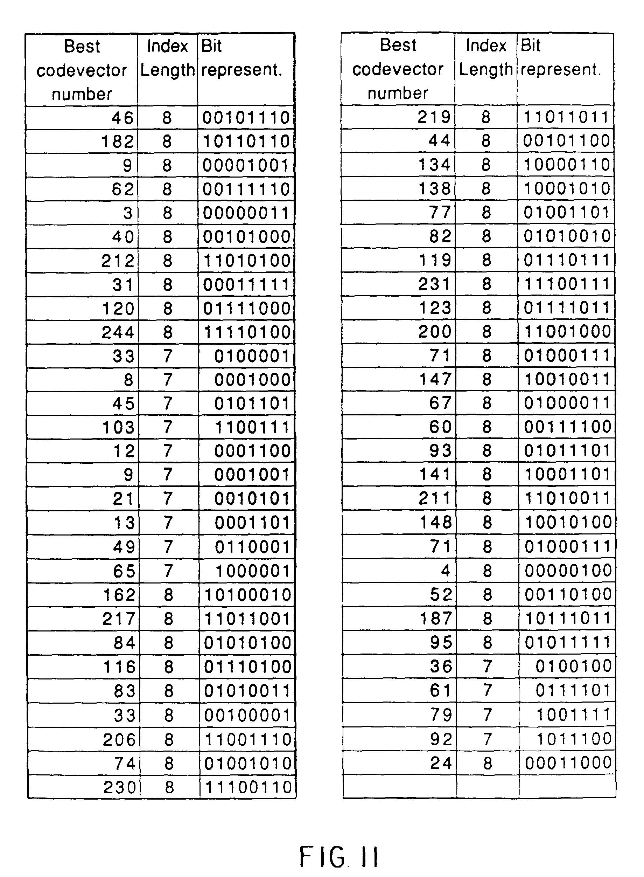

The table of Figure 11 shows the best codevector number, with the numbers arranged in a sequence, from the left column to the right column and, heading down, that corresponds to the sequence of the template elements shown in the tables of Figure 6A and 6B. It is important to maintain the sequence of template elements consistent with Figures 6A and 6B so that the process shown in Figure 9B has the bit stream pointer interpreting the compressed image bit stream correctly. The index length for each of the best codevector numbers shown in Figure 11 corresponds to the feature type index length from the table shown in Figure 5 as the index length. The representation of the best codevector number is then shown as a binary representation, in the bit representation column, with the bit representation having a length corresponding to the index length. In the cases where the binary number does not have sufficient digits it is padded with leading zeroes in order to have a binary length corresponding to the index length in the preceding column of its bit representation. If the binary digits in the bit representation columns are sequenced, starting with the left column and proceeding down and then into the right column, the resulting 442-bit binary number would correspond to the final output compressed image. This would correspond to the compressed image 24 in Figure 1.

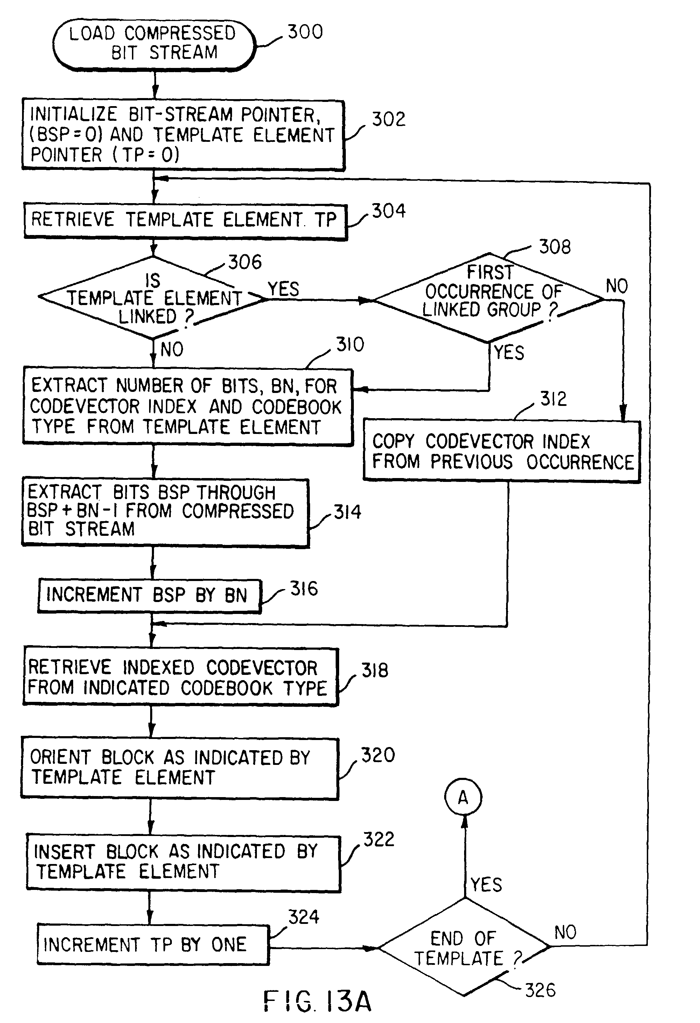

Figure 12 illustrates a transaction card 120 with a means of digital storage. This storage means can be accomplished by a variety of means such as magnetic encoding, or by bar code patterns. In the case of the magnetic storage, a common method is for the magnetic storage area 122 to have multiple tracks as indicated in Figure 12 by Track 1, Track 2, and Track 3..

Referring now to Figure 13A. In Figure 13A the compressed bit stream is decompressed to form a decompressed image. The bit stream pointer BSP is initialized to zero and the template element pointer TP is set to zero in block 302. The process proceeds to block 304 wherein the template element TP is retrieved. In block 306 a decision is made as to whether or not the template element is linked. If it is not linked the process proceeds to block 310. If it is linked the process proceeds to decision block 308. Decision block 308 determines if this is the first occurrence of a linked group. If it is the process proceeds to block 310. If it is not the process proceeds to block 312.

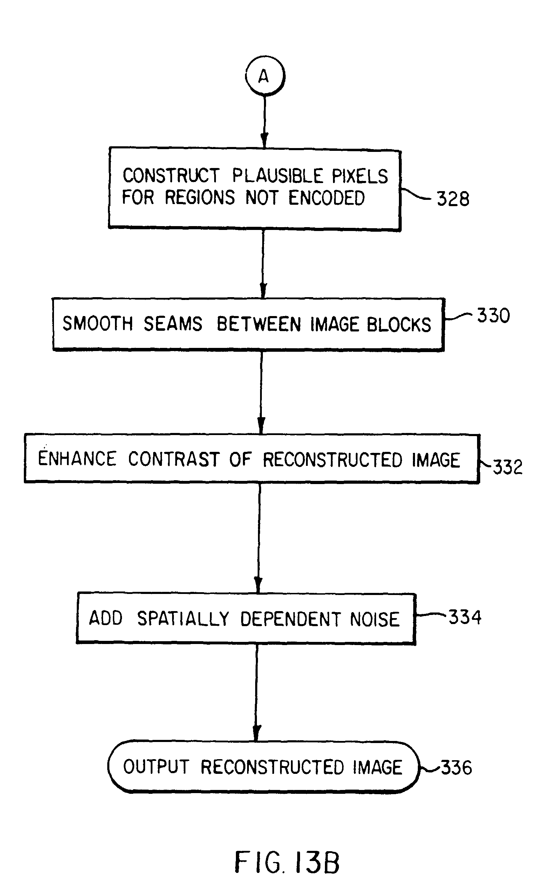

Referring now to block 310, the number of bits BN for the codevector index and the codebook type are extracted from the template element. The bits, BSP through BSP + BN - 1, are extracted from the compressed bit stream in block 314. The bit stream pointer is incremented by BN in block 316. The process then flows to block 318. Retracing the flow back to block 312, when there is a link group which is not the first occurrence of that group, the codevector index from the previous occurrence of the link group is copied. That previous occurrence is moved into block 318. In block 318 the index codevector from the indicated codebook type is retrieved. This codevector represents a feature type from a particular image. The template element indicates how the blocks should be oriented. In block 320 we orient the blocks as indicated by the template elements. If indicated, a horizontal, left-to-right flip or a vertical, top-to-bottom flip, is executed. In block 322 the block in the location indicated by the template element is inserted into the image. In block 324, the template pointer TP is incremented by one. The decision block 326 determines if all the template elements have been used. If not, the process returns to block 304 and continues. If all the template have been used the process moves to point A in Figure 13B.

In Figure 13B the process for building the index is shown. Next the process constructs those regions with no template elements assigned to them. Plausible pixels are used for those regions, per block 328. Image blocks in block 330 have seams between them which have to be smoothed, and this process, is represented in block 330. Smoothing of the seams is achieved by taking averages across the seams, both horizontally and vertically. In block 332 the contrast of the reconstructed image is enhanced. This is done by making sure that the full dynamic range of the image 0-255 is used in the reconstructed image. In the preferred embodiment this is done by a simple linear re-scaling. In block 334 spatially-dependent random noise is added. This is done relative to the center of the image with the center of the image being very minor and the image noise on the periphery being much more accentuated. In block 336 the reconstructed image is outputted. The outputted image corresponds to the decompressed image of Figure 1, block 28.

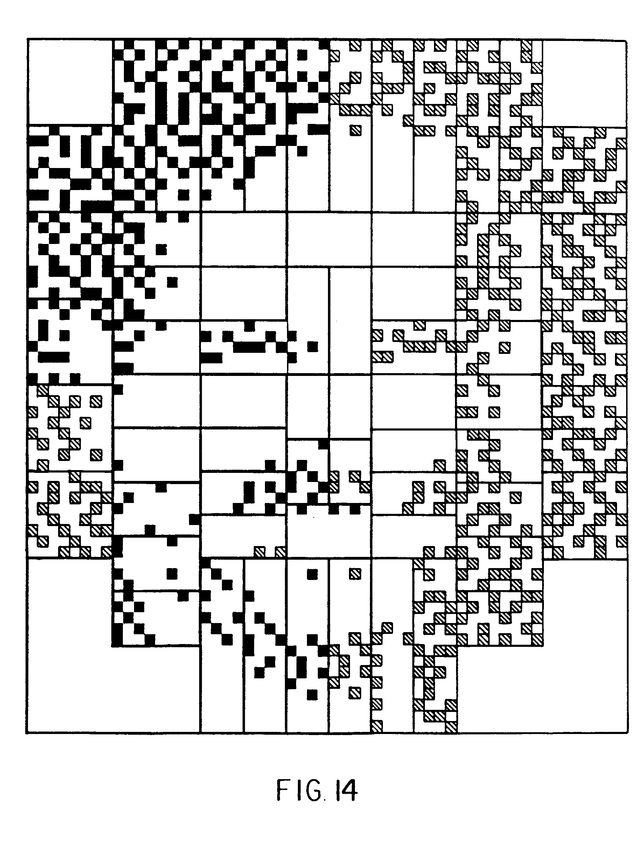

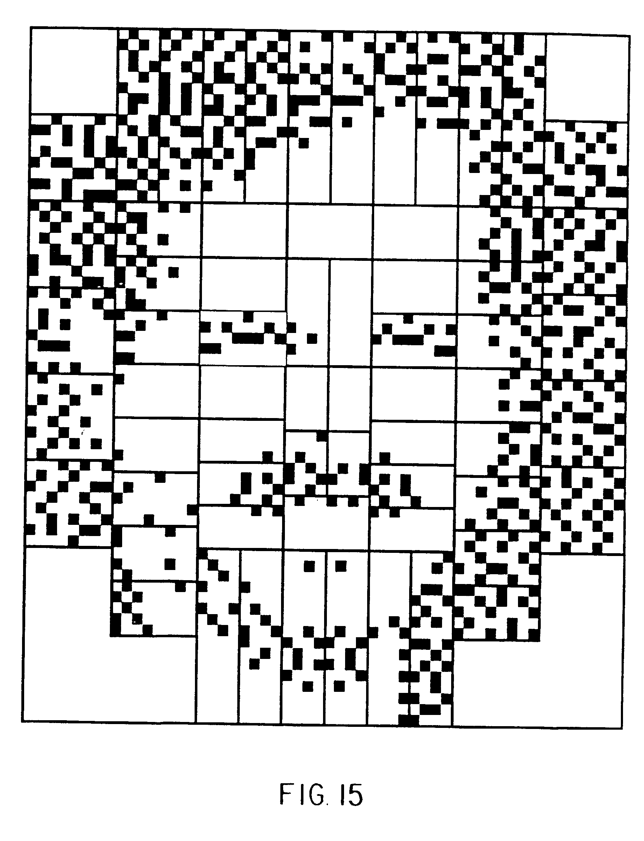

Figures 4B and 4C indicated which template elements possessed the left-to-right and top-to-bottom flipping property, respectively. The template elements with these flip properties are also indicated with the TRUE/FALSE flags in the tables of Figure 6A and 6B. The codevectors in Figure 14 that are to be flipped are identified by diagonal lines through the boxes representing pixels. Figure 15 represents the application of the flipping properties to the codevectors in Figure 14, where all codevectors in Figure 14 which correspond to the darkened template elements in Figure 4B are flipped left-to-right and all codevectors in Figure 14 which correspond to the darkened template elements in Figure 4C are flipped top-to-bottom. It should be noted that some template elements undergo both flips in the transformation of the codevectors from Figure 14 into the codevector orientation of Figure 15 and that the flips take place within the associated element.

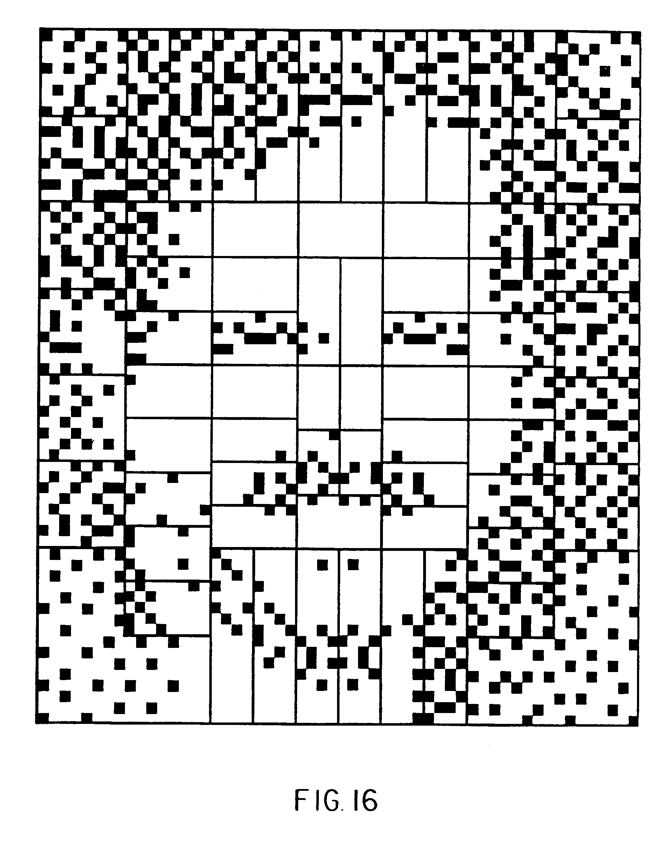

The next step is the formation, by image processing operations, of a final image, shown in Figure 16, based on the oriented codevector mosaic of Figure 15. The mosaic of Figure 15 may have certain visually objectionable artifacts as a result of its construction from codevectors. These artifacts can be diminished with some combination of image processing algorithms.

In the preferred embodiment, a combination of well known image processing operations are applied including, smoothing across the codevector boundaries, contrast enhancement, linear interpolation to fill missing image regions, and the addition of spatially dependent random noise. The smoothing operation is described by considering three successive pixels, $P_1$, $P_2$, and $P_3$, where $P_1$ and $P_2$ are in one codevector and $P_3$ is in an adjoining codevector. The pixel $P_2$ is replaced by result of:

$$(P_1 + 2 * P_2 + P_3) / 4.$$

The contrast enhancement is achieved by determining the minimum pixel value, min, and the maximum pixel value, max, for the mosaic. Each pixel value, $P_{cur}$, of the mosaic is replaced by $P_{new}$ according to the formula:

$$P_{new} = 255*(P_{cur} - min) / (max - min).$$

The regions of the feature template not corresponding to any template element are filled using linear interpolation. For each region, the known values of the boundary pixels are used to calculate an average pixel value. The unknown corner opposite the known boundary is set to this average value. The remainder of the unassigned interior pixels are calculated by linear interpolation. In the preferred embodiment of the present invention, there are four such unassigned regions, each located in a corner of the feature template.

The spatially random noise, to be added, is determined by:

$$n(i,j) = v * sqrt((i-28)**2 + (j-32)**2) * rand$$

v = noise magnitude
where i = column of the affected pixel,
    j = row of the affected pixel, and
    rand is a pseudo-random, floating-point number in the range (-1 to 1). The value n(i,j) is added to pixel at location (i,j). If the resultant pixel is greater than 255 it is clipped to 255, and if it is less than zero it is set to 0. Figure 16 represents an image after processing by these operations. It should be understood that other image processing operations may be used in other situations, and the preferred embodiment should not be considered limiting.

Figure 17, illustrates an apparatus 100 on which the present method may be implemented. The apparatus 100 is comprised of a means 102 for converting a non-digital image, such as a photo print 80, or a negative image 82, into a digital representation of an image. Generally, the conversion is performed with a scanner 104 that outputs signals representing pixel values in analog form. An analog-to-digital converter 106 is then used to convert the analog pixel values to digital values representative of the scanned image. Other sources of digital images may be directly inputted into a workstation 200. In the preferred apparatus embodiment of the invention the workstation 200 is a SUN SPARC 10, running UNIX as the operating system and encoded using standard C programming language. Display of the digital images is by way of the display 202 operating under software, keyboard 204, and mouse 206 control. Digital images may also be introduced into the system by means of a CD reader 208 or other like device. The templates created by the present method and apparatus may be downloaded to a CD writer 210 for storage on a CD, hard copy printed by a printer 212, downloaded to a transaction card writer 216 to be encoded onto the data storage area, or transmitted for further processing or storage at remote locations by means of a modem 214 and transmission lines.

**Claims**

1. A method for forming an addressable collection of image features by codevectors representing a selected class of images comprising the steps of:

   a. establishing a standard for the selected class of images including preferred locations for selected image features;
   b. selecting one image from a plurality of training images belonging to the selected class of images;
   c. locating at least one selected image feature within the selected image;
   d. manipulating the selected image to form a standardized geometric image wherein the at least one selected image feature is positioned according to the standard established in step a;
   e. repeating steps b through d for each of the training images;
   f. providing a template partitioned into template elements, each template element corresponding to a region of the standardized geometric images where one of a plurality of types of image feature is expected to be located;
   g. associating a left-to-right symmetry property with at least one template element;

   h. associating a top-to-bottom symmetry property with at least one template element;
   i. selecting one of the standardized geometric images formed in step d and, for each template element in the template, extracting from the selected standardized geometric image, image blocks corresponding to said each template element;
   j. flipping about a vertical image axis all extracted image blocks for template elements with the left-to-right symmetry property;
   k. flipping about a horizontal image axis all extracted image blocks for template elements with the top-to-bottom symmetry property;
   l. repeating steps i through k for the remainder of the standardized geometric images formed in step d;
   m. for each type of image feature, collecting all image blocks extracted in step i which correspond to said each type of image feature into one group; and
   n. forming for each group collected in step m an addressable collection of feature codevectors which represents the respective group.

2. The method according to Claim 1, wherein step f comprises the step of:

   forming a template element representing the association of the position and dimensions of a feature block within the standardized geometric image with one of said addressable collection of feature codevectors.

3. The method according to Claim 1, further comprising the compression of a featured image by the steps of:

   i. applying steps c, d and f through k to the featured image;
   ii. comparing the extracted feature blocks from step k with the addressable collection of feature codevectors associated with the extracted feature; and
   iii. recording the address of the best match for each feature block.

4. The method according to Claim 3, further comprising the step of:

   forming a sequence of template elements each representing the association of the position and dimensions of a feature block within the standardized geometric image with one of said addressable collection of feature codevectors.

**Patentansprüche**

1. Verfahren zum Erzeugen einer adressierbaren Sammlung von Bildmerkmalen durch eine ausgewählte Bildklasse darstellende Code-Vektoren, wobei das Verfahren folgende Schritte umfaßt:

a. Erstellen eines Standards für die ausgewählte Bildklasse einschließlich bevorzugter Stellen für ausgewählte Bildmerkmale;

b. Auswählen eines Bildes aus einer Vielzahl von zu der ausgewählten Bildklasse gehörenden Lernbildern;

c. Festlegen von zumindest einem Bildmerkmal im ausgewählten Bild;

d. Manipulieren des ausgewählten Bildes, um ein standardisiertes geometrisches Bild zu erzeugen, wobei das zumindest eine ausgewählte Bildmerkmal entsprechend des in Schritt a erstellten Standards positioniert wird;

e. Wiederholen der Schritte a bis d bei jedem der Lernbilder;

f. Erzeugen einer Schablone, die in Schablonenelemente unterteilt ist, welche jeweils einem Bereich der standardisierten geometrischen Bilder entsprechen, wobei eine aus einer Vielzahl von Bildmerkmalsarten festgelegt werden soll;

g. Zuordnen einer Links/Rechts-Symmetrie-Eigenschaft zu zumindest einem Schablonenelement;

h. Zuordnen einer Oben/Unten-Symmetrie-Eigenschaft zu zumindest einem Schablonenelement;

i. Auswählen eines der in Schritt d erzeugten, standardisierten geometrischen Bilder und, bei jedem in der Schablone vorhandenen Schablonenelement, Aussondern der dem jeweiligen Schablonenelement entsprechenden Bildblökken aus dem ausgewählten, standardisierten geometrischen Bild;

j. Drehen aller ausgesonderten Bildblöcke bei den Schablonenelementen mit der Links/Rechts-Symmetrie-Eigenschaft um die vertikale Bildachse;

k. Drehen aller ausgesonderten Bildblöcke bei den Schablonenelementen mit der Oben/Unten-Symmetrie-Eigenschaft um die horizontale Bildachse;

l. Wiederholen der Schritte i bis k bei den restlichen, in Schritt d erzeugten, standardisierten geometrischen Bildern;

m. Zusammenführen, bei jeder Bildmerkmalsart, aller in Schritt i ausgesonderten Bildblöcke, die den jeweiligen Bildmerkmalsarten entsprechen, zu einer Gruppe;

n. Erzeugen für jede in Schritt m zusammengeführte Gruppe einer adressierbaren Sammlung von Merkmals-Codevektoren, welche die jeweiligen Gruppen darstellen.

2. Verfahren nach Anspruch 1, dadurch gekennzeichnet, daß Schritt f folgenden Schritt einschließt:

- Erzeugen eines Schablonenelements, welches die Zuordnung von Lage und Abmessungen eines Merkmalsblocks im standardisierten geometrischen Bild zu einem aus der adressierbaren Sammlung von Merkmals-Codevektoren darstellt.

3. Verfahren nach Anspruch 1, gekennzeichnet durch das Komprimieren eines vorhandenen Bildes durch folgende Schritte:

i. Durchführen der Schritte c, d und f bis k bei dem vorhandenen Bild;

ii. Vergleichen der ausgesonderten Merkmalsblöcke aus Schritt k mit der adressierbaren Sammlung von dem ausgeschnittenen Merkmal zugeordneten Merkmals-Codevektoren; und

iii. Aufzeichnen der Adresse der besten Anpassung bei jedem Merkmalsblock.

4. Verfahren nach Anspruch 3, gekennzeichnet durch folgenden zusätzlichen Schritt:

- Erzeugen einer Folge von Schablonenelementen, von denen jedes die Zuordnung von Lage und Abmessungen eines Merkmalsblocks im standardisierten geometrischen Bild zu einem aus der adressierbaren Sammlung von Merkmals-Codevektoren darstellt.

**Revendications**

1. Procédé de formation d'une collection adressable de caractéristiques d'image par des vecteurs codificateur représentant une classe sélectionnée d'images comprenant les étapes consistant à :

a. établir un standard pour la classe sélectionnée d'images comprenant les emplacements préférés pour les caractéristiques d'image sélectionnées,

b. sélectionner une image à partir d'une pluralité d'images d'apprentissage appartenant à la classe sélectionnée d'images,

c. localiser au moins une caractéristique d'image sélectionnée à l'intérieur de l'image sélectionnée,

d. manipuler l'image sélectionnée afin de former une image géométrique standardisée dans laquelle la au moins une caractéristique d'image sélectionnée est positionnée conformément au standard établi à l'étape a,

e. répéter les étapes b à d pour chacune des images d'apprentissage,

f. prévoir un gabarit séparé en éléments de gabarit, chaque élément de gabarit correspondant à une région des images géométriques standardisées, dans lequel une pluralité de types de caractéristiques d'image est prévue être localisée,

g. associer une propriété de symétrie gauche/droite à au moins un élément de gabarit,

h. associer une propriété de symétrie haut/bas à au moins un élément de gabarit,

i. sélectionner l'une des images géométriques standardisées formées à l'étape d et, pour chaque élément de gabarit du gabarit, extraire de l'image géométrique standardisée sélectionnée, des blocs d'image correspondant audit chaque élément de gabarit,

j. basculer autour d'un axe d'image vertical tous les blocs d'image extraits pour les éléments de gabarit présentant la propriété de symétrie gauche/droite,

k. basculer autour d'un axe d'image horizontal tous les blocs d'image extraits pour les éléments de gabarit présentant la propriété de symétrie haut/bas,

l. répéter les étapes i à k pour le reste des images géométriques standardisées formées à l'étape d,

m. pour chaque type de caractéristique d'image recueillir tous les blocs d'image extraits à l'étape i qui correspondent audit chaque type de caractéristique d'image en un groupe, et

n. former pour chaque groupe recueilli à l'étape m une collection adressable de vecteurs codificateur de caractéristique qui représente le groupe respectif.

2. Procédé selon la revendication 1, dans lequel l'étape f comprend l'étape consistant à :

former un élément de gabarit représentant l'association de la position et des dimensions d'un bloc de caractéristique à l'intérieur de l'image géométrique standardisée avec l'un de ladite collection adressable de vecteurs codificateur de caractéristique.

3. Procédé selon la revendication 1, comprenant en outre la compression d'une image caractérisée par les étapes consistant à :

i. appliquer les étapes c, d et f à k à l'image caractérisée,

ii. comparer les blocs de caractéristiques extraits à partir de l'étape k à la collection adressable de vecteurs de code de caractéristique associés à la caractéristique extraite, et

iii. enregistrer l'adresse de la meilleure correspondance pour chaque bloc de caractéristique.

4. Procédé selon la revendication 3, comprenant en outre l'étape consistant à :

former une séquence d'éléments de gabarit, chacun représentant l'association de la position et des dimensions d'un bloc de caractéristique à l'intérieur de l'image géométrique standardisée, avec l'un de ladite collection adressable de vecteurs codificateur de caractéristique.

FIG. 1

FIG. 2A

FIG. 2B

FIG. 2C

FIG. 12

30 — SELECT AN IMAGE

32 — LOAD IMAGE

34 — LOCATE LEFT & RIGHT EYE POINTS IN IMAGE

36 — ROTATE, TRANSLATE & RESCALE TO POSITION EYE POINTS

38 — STORE STANDARDIZED GEOMETRIC IMAGE

40 — ADJUST LUMINANCE FOR LEFT/RIGHT, TOP/BOTTOM & VERTICAL CENTERLINE

42 — SUPRESS SPECULAR HIGHLIGHTS

44 — CALCULATE LOCAL CONTRAST FOR EACH IMAGE PIXEL

46 — ADJUST LOCAL CONTRAST BASED ON PIXEL LOCATION

48 — REDUCE VERTICAL LUMINANCE ASYMMETRY ABOUT CENTERLINE

50 — SHIFT FACIAL MEAN LUMINANCE TO PRESET VALUE

52 — STORE STANDARDIZED IMAGE

54 — END

FIG. 3

FIG. 4A

FIG. 4B

FIG. 4C

FIG. 4D

| Label | A | B | C | D | E | F | G | H | I | J | K | L | M | Total |
|---|---|---|---|---|---|---|---|---|---|---|---|---|---|---|
| Features | Hair Top | Hair Side | Fore-head | Eye Ridge | Nose | Ears | Eye | Nos-trils | Lip Side | Jowl | Teeth | Neck Side | Neck | |
| Index Length | 8 | 7 | 8 | 8 | 8 | 8 | 8 | 8 | 8 | 8 | 8 | 7 | 8 | |
| Width | 4 | 8 | 8 | 8 | 4 | 8 | 8 | 4 | 8 | 8 | 8 | 4 | 4 | |
| Height | 16 | 8 | 5 | 5 | 10 | 5 | 5 | 6 | 4 | 5 | 5 | 16 | 16 | |
| Occurrences | 10 | 10 | 7 | 4 | 2 | 6 | 2 | 4 | 6 | 6 | 1 | 4 | 2 | 64 |
| Unique | 10 | 10 | 7 | 2 | 2 | 6 | 1 | 4 | 3 | 6 | 1 | 4 | 1 | 57 |
| Feature Bits | 80 | 70 | 56 | 16 | 16 | 48 | 8 | 32 | 24 | 48 | 8 | 28 | 8 | 442 |

FIG. 5

| Down | Right | Height | Width | Label | Link Group | LR Flip | TB Flip |
|------|-------|--------|-------|-------|------------|---------|---------|
| 0 | 8 | 16 | 4 | A | -1 | FALSE | FALSE |
| 0 | 12 | 16 | 4 | A | -1 | FALSE | FALSE |
| 0 | 16 | 16 | 4 | A | -1 | FALSE | FALSE |
| 0 | 20 | 16 | 4 | A | -1 | FALSE | FALSE |
| 0 | 24 | 16 | 4 | A | -1 | FALSE | FALSE |
| 0 | 28 | 16 | 4 | A | -1 | TRUE | FALSE |
| 0 | 32 | 16 | 4 | A | -1 | TRUE | FALSE |
| 0 | 36 | 16 | 4 | A | -1 | TRUE | FALSE |
| 0 | 40 | 16 | 4 | A | -1 | TRUE | FALSE |
| 0 | 44 | 16 | 4 | A | -1 | TRUE | FALSE |
| 8 | 0 | 8 | 8 | B | -1 | FALSE | FALSE |
| 16 | 0 | 8 | 8 | B | -1 | FALSE | FALSE |
| 24 | 0 | 8 | 8 | B | -1 | FALSE | FALSE |
| 32 | 0 | 8 | 8 | B | -1 | FALSE | TRUE |
| 40 | 0 | 8 | 8 | B | -1 | FALSE | TRUE |
| 8 | 48 | 8 | 8 | B | -1 | TRUE | FALSE |
| 16 | 48 | 8 | 8 | B | -1 | TRUE | FALSE |
| 24 | 48 | 8 | 8 | B | -1 | TRUE | FALSE |
| 32 | 48 | 8 | 8 | B | -1 | TRUE | TRUE |
| 40 | 48 | 8 | 8 | B | -1 | TRUE | TRUE |
| 16 | 8 | 5 | 8 | C | -1 | FALSE | FALSE |
| 16 | 16 | 5 | 8 | C | -1 | FALSE | FALSE |
| 16 | 24 | 5 | 8 | C | -1 | TRUE | FALSE |
| 16 | 32 | 5 | 8 | C | -1 | TRUE | FALSE |
| 16 | 40 | 5 | 8 | C | -1 | TRUE | FALSE |
| 21 | 8 | 5 | 8 | C | -1 | FALSE | FALSE |
| 21 | 40 | 5 | 8 | C | -1 | TRUE | FALSE |
| 21 | 16 | 5 | 8 | D | 0 | FALSE | FALSE |
| 21 | 32 | 5 | 8 | D | 0 | TRUE | FALSE |
| 31 | 16 | 5 | 8 | D | 1 | FALSE | TRUE |
| 31 | 32 | 5 | 8 | D | 1 | TRUE | TRUE |
| 21 | 24 | 10 | 4 | E | -1 | FALSE | FALSE |

FIG. 6A

| Down | Right | Height | Width | Label | Link Group | LR Flip | TB Flip |
|---|---|---|---|---|---|---|---|
| 21 | 28 | 10 | 4 | E | -1 | TRUE | FALSE |
| 26 | 8 | 5 | 8 | F | -1 | FALSE | FALSE |
| 31 | 8 | 5 | 8 | F | -1 | FALSE | FALSE |
| 36 | 8 | 5 | 8 | F | -1 | FALSE | FALSE |
| 26 | 40 | 5 | 8 | F | -1 | TRUE | FALSE |
| 31 | 40 | 5 | 8 | F | -1 | TRUE | FALSE |
| 36 | 40 | 5 | 8 | F | -1 | TRUE | FALSE |
| 26 | 16 | 5 | 8 | G | 2 | FALSE | FALSE |
| 26 | 32 | 5 | 8 | G | 2 | TRUE | FALSE |
| 31 | 24 | 6 | 4 | H | -1 | FALSE | FALSE |
| 37 | 24 | 6 | 4 | H | -1 | FALSE | FALSE |
| 31 | 28 | 6 | 4 | H | -1 | TRUE | FALSE |
| 37 | 28 | 6 | 4 | H | -1 | TRUE | FALSE |
| 40 | 16 | 4 | 8 | I | 3 | FALSE | FALSE |
| 40 | 32 | 4 | 8 | I | 3 | TRUE | FALSE |
| 44 | 16 | 4 | 8 | I | 4 | FALSE | FALSE |
| 44 | 32 | 4 | 8 | I | 4 | TRUE | FALSE |
| 48 | 16 | 4 | 8 | I | 5 | FALSE | TRUE |
| 48 | 32 | 4 | 8 | I | 5 | TRUE | TRUE |
| 41 | 8 | 5 | 8 | J | -1 | FALSE | FALSE |
| 46 | 8 | 5 | 8 | J | -1 | FALSE | FALSE |
| 51 | 8 | 5 | 8 | J | -1 | FALSE | FALSE |
| 41 | 40 | 5 | 8 | J | -1 | TRUE | FALSE |
| 46 | 40 | 5 | 8 | J | -1 | TRUE | FALSE |
| 51 | 40 | 5 | 8 | J | -1 | TRUE | FALSE |
| 43 | 24 | 5 | 8 | K | -1 | FALSE | FALSE |
| 48 | 16 | 16 | 4 | L | -1 | FALSE | FALSE |
| 48 | 20 | 16 | 4 | L | -1 | FALSE | FALSE |
| 48 | 32 | 16 | 4 | L | -1 | TRUE | FALSE |
| 48 | 36 | 16 | 4 | L | -1 | TRUE | FALSE |
| 48 | 24 | 16 | 4 | M | 6 | FALSE | FALSE |
| 48 | 28 | 16 | 4 | M | 6 | TRUE | FALSE |

FIG. 6B

```
          ┌─────────────────────┐  700
          │ LOAD STANDARDIZED   │
          │ TRAINING IMAGES     │
          └─────────────────────┘
                    │
                    ▼
          ┌─────────────────────┐  702
          │ EXTRACT IMAGE BLOCKS│◄────┐
          │ FROM NEXT IMAGE FOR │     │
          │ SELECTED CODEBOOK   │     │
          │ TYPE                │     │
          └─────────────────────┘     │
                    │                  │
                    ▼                  │
          ┌─────────────────────┐  704 │
          │ ORIENT IMAGE BLOCKS │     │
          │ BASED ON SYMMETRY   │     │
          │ TYPE                │     │
          └─────────────────────┘     │
                    │           706    │ YES
                    ▼                  │
              ◇ NEXT IMAGE ? ◇─────────┘
                    │ NO
                    ▼
          ┌─────────────────────┐  708
          │ INITIALIZE CENTROIDS│
          │ AS RANDOM IMAGE     │
          │ BLOCKS              │
          └─────────────────────┘
                    │
                    ▼
          ┌─────────────────────┐  710
          │ ASSIGN EACH IMAGE   │
          │ BLOCK TO NEAREST    │
          │ CENTROID            │
          └─────────────────────┘
                    │
                    ▼
          ┌─────────────────────┐  712
          │ MERGE CENTROIDS     │◄── NO
          │ CLOSER THAN         │
          │ THRESHOLD VALUE     │
          └─────────────────────┘
                    │
                    ▼
          ┌─────────────────────┐  714
          │ SPLIT CENTROIDS OF  │
          │ LARGE EXTENT WITH   │
          │ UNASSIGNED CENTROIDS│
          └─────────────────────┘
                    │
                    ▼
          ┌─────────────────────┐  716
          │ UNASSIGN LEAST      │
          │ POPULATED CENTROIDS │
          │ AND USE TO SPLIT    │
          │ CENTROIDS OF LARGE  │
          │ EXTENT              │
          └─────────────────────┘
```

```
          ┌─────────────────────┐  718
          │ MERGE CLOSEST       │◄────┐
          │ CENTROIDS           │     │
          └─────────────────────┘     │
                    │                  │
                    ▼                  │
          ┌─────────────────────┐  720 │
          │ SPLIT CENTROIDS OF  │     │
          │ LARGE EXTENT WITH   │     │
          │ UNASSIGNED CENTROIDS│     │
          └─────────────────────┘     │
                    │                  │
                    ▼                  │
          ┌─────────────────────┐  722 │
          │ FIND NEW POSITION OF│     │
          │ EACH CENTROID       │     │
          └─────────────────────┘     │
                    │                  │
                    ▼                  │
          ┌─────────────────────┐  724 │
          │ ASSIGN EACH IMAGE   │     │
          │ BLOCK TO NEAREST    │     │
          │ CENTROID            │     │
          └─────────────────────┘     │
                    │                  │
                    ▼                  │
          ┌─────────────────────┐  726 │
          │ REORDER CENTROIDS IN│     │
          │ FROM MOST TO LEAST  │     │
          │ POPULATED           │     │
          └─────────────────────┘     │
                    │           728    │
                    ▼                  │
          NO ◄── ◇ CONVERGED ? ◇       │
                    │ YES              │
                    ▼              730 │
          ┌─────────────────────┐     │
          │ STORE CENTROIDS AS  │     │
          │ CODEVECTORS OF      │     │
          │ CODEBOOK            │     │
          └─────────────────────┘     │
```

FIG. 7

FIG. 8

LOAD IMAGE — 900

↓

STANDARDIZE IMAGE — 902

↓

EXTRACT NEXT IMAGE BLOCK FOR CODEBOOK ELEMENT — 904

↓

ORIENT IMAGE BLOCK BASED ON SYMMETRY TYPE — 906

↓

FIND INDEX OF BEST MATCH CODEVECTOR FROM CODEBOOK — 908

↓

LINKED BLOCK ? — 910

YES → STORE VALUE OF HOW GOOD THE MATCH IS — 914

↓

COMPARE VALUE WITH OTHER LINKED BLOCKS IN GROUP — 916

↓

SELECT CODEVECTOR WITH BEST VALUE AS BEST MATCH — 918

NO ↓

STORE INDEX OF BEST MATCH CODEVECTOR FROM CODEBOOK — 912

↓

LAST ELEMENT ? — 920

NO

YES ↓

BUILD COMPRESSED IMAGE — 922

FIG. 9A

SET:
BIT-STREAM POINTER (BSP) = 0 — 950
TEMPLATE ELEMENT POINTER (TP) = 0

RETRIEVE TEMPLATE — 952
ELEMENT TP

954 — IS TEMPLATE ELEMENT LINKED ? — YES — 956 — FIRST OCCURRENCE OF LINKAGE GROUP ? — NO

NO — YES

958 — RETRIEVE NUMBER OF BITS, BN, USED TO ENCODE TEMPLATE ELEMENT

960 — ENCODE CODEVECTOR INDEX WITH BN BITS

INSERT BITS STARTING AT BIT LOCATION BSP — 962

ADD BN TO BSP — 964

INCREMENT TP BY ONE — 966

BIT-STREAM COMPLETE — YES — END OF TEMPLATE ? — 968 — NO

970

FIG. 9B

FIG. 10

| Best codevector number | Index Length | Bit represent. |
|---|---|---|
| 46 | 8 | 00101110 |
| 182 | 8 | 10110110 |
| 9 | 8 | 00001001 |
| 62 | 8 | 00111110 |
| 3 | 8 | 00000011 |
| 40 | 8 | 00101000 |
| 212 | 8 | 11010100 |
| 31 | 8 | 00011111 |
| 120 | 8 | 01111000 |
| 244 | 8 | 11110100 |
| 33 | 7 | 0100001 |
| 8 | 7 | 0001000 |
| 45 | 7 | 0101101 |
| 103 | 7 | 1100111 |
| 12 | 7 | 0001100 |
| 9 | 7 | 0001001 |
| 21 | 7 | 0010101 |
| 13 | 7 | 0001101 |
| 49 | 7 | 0110001 |
| 65 | 7 | 1000001 |
| 162 | 8 | 10100010 |
| 217 | 8 | 11011001 |
| 84 | 8 | 01010100 |
| 116 | 8 | 01110100 |
| 83 | 8 | 01010011 |
| 33 | 8 | 00100001 |
| 206 | 8 | 11001110 |
| 74 | 8 | 01001010 |
| 230 | 8 | 11100110 |

| Best codevector number | Index Length | Bit represent. |
|---|---|---|
| 219 | 8 | 11011011 |
| 44 | 8 | 00101100 |
| 134 | 8 | 10000110 |
| 138 | 8 | 10001010 |
| 77 | 8 | 01001101 |
| 82 | 8 | 01010010 |
| 119 | 8 | 01110111 |
| 231 | 8 | 11100111 |
| 123 | 8 | 01111011 |
| 200 | 8 | 11001000 |
| 71 | 8 | 01000111 |
| 147 | 8 | 10010011 |
| 67 | 8 | 01000011 |
| 60 | 8 | 00111100 |
| 93 | 8 | 01011101 |
| 141 | 8 | 10001101 |
| 211 | 8 | 11010011 |
| 148 | 8 | 10010100 |
| 71 | 8 | 01000111 |
| 4 | 8 | 00000100 |
| 52 | 8 | 00110100 |
| 187 | 8 | 10111011 |
| 95 | 8 | 01011111 |
| 36 | 7 | 0100100 |
| 61 | 7 | 0111101 |
| 79 | 7 | 1001111 |
| 92 | 7 | 1011100 |
| 24 | 8 | 00011000 |
|  |  |  |

FIG. II

LOAD COMPRESSED BIT STREAM _300_

INITIALIZE BIT-STREAM POINTER, (BSP=0) AND TEMPLATE ELEMENT POINTER (TP=0) _302_

RETRIEVE TEMPLATE ELEMENT, TP _304_

_306_ IS TEMPLATE ELEMENT LINKED ?

_308_ FIRST OCCURRENCE OF LINKED GROUP ?

YES

NO

NO

YES

EXTRACT NUMBER OF BITS, BN, FOR CODEVECTOR INDEX AND CODEBOOK TYPE FROM TEMPLATE ELEMENT _310_

COPY CODEVECTOR INDEX FROM PREVIOUS OCCURRENCE _312_

EXTRACT BITS BSP THROUGH BSP+BN-1 FROM COMPRESSED BIT STREAM _314_

INCREMENT BSP BY BN _316_

RETRIEVE INDEXED CODEVECTOR FROM INDICATED CODEBOOK TYPE _318_

ORIENT BLOCK AS INDICATED BY TEMPLATE ELEMENT _320_

INSERT BLOCK AS INDICATED BY TEMPLATE ELEMENT _322_

INCREMENT TP BY ONE _324_

END OF TEMPLATE ? _326_

YES

NO

A

FIG. 13A

A

CONSTRUCT PLAUSIBLE PIXELS
FOR REGIONS NOT ENCODED — 328

SMOOTH SEAMS BETWEEN IMAGE BLOCKS — 330

ENHANCE CONTRAST OF RECONSTRUCTED IMAGE — 332

ADD SPATIALLY DEPENDENT NOISE — 334

OUTPUT RECONSTRUCTED IMAGE — 336

FIG. 13B

FIG. 14

FIG. 15

FIG. 16

FIG. 17

EP 0 718 807 B1